# EUROPEAN PATENT APPLICATION

(11) **EP 3 150 895 A1**
(43) Date of publication of application: **05.04.2017**
(21) Application number: 15800517.3
(22) Date of filing: 26.05.2015
(51) Int. Cl.: F16L 15/04

(54) **THREADED STEEL-PIPE FITTING**

(30) Priority: 30.05.2014 JP 2014113084
(71) Applicant: Nippon Steel & Sumitomo Metal Corporation, Tokyo 100-8071 (JP); Vallourec Oil and Gas France, 59620 Aulnoye-Aymeries (FR)
(72) Inventor: SUGINO, Masaaki, Tokyo 100-8071 (JP); GOTO, Kunio, Tokyo 100-8071 (JP)
(74) Representative: Jackson, Martin Peter
(86) International application number: PCT/JP2015/002662
(87) International publication number: WO 2015/182128

(57) **Abstract**

A threaded joint has a solid coating (30) formed on a surface of a male threaded portion (11) thereof, the solid coating having fluidity during application and being cured after the application. In a made-up state, clearances are provided between flat crests (12) of the male threaded portion (11) and flat roots of a female threaded portion which face each other. The crests (12) of the male threaded portion (11) have a helical groove (40) previously formed therein, the helical groove having a lead angle equal to the lead angle of the threads. The groove (40) has a maximum depth of at least 30 µm, the depth being at most one-fifth of a height of the threads. In this threaded joint, the occurrences of galling and an abnormal make-up torque can be prevented during make-up without compromising the strength properties of the threaded joint.

## Description

### TECHNICAL FIELD

The present invention relates to a threaded joint for use in connecting steel pipes.

### BACKGROUND ART

In oil wells, natural gas wells, and the like (hereinafter also collectively referred to as "oil wells"), steel pipes referred to as oil country tubular goods (OCTG) are used for extraction of underground resources. The steel pipes are sequentially connected to each other, and threaded joints are used for the connection. Threaded joints for steel pipes must be provided with functions that enable rapid make-up operations for connecting steel pipes and rapid break-out operations for disconnecting the steel pipes. In addition, threaded joints for steel pipes must also have high reliability in terms of strength and sealing performance.

Generally, threaded joints for steel pipes are classified into two types: coupling-type joints and integral-type joints. A coupling-type threaded joint is constituted by a pair of tubular goods that are to be connected to each other, of which one is a steel pipe and the other is a coupling. In this case, the steel pipe includes male threaded portions formed on the outer peripheries at both ends thereof, and the coupling includes female threaded portions formed on the inner peripheries at both ends thereof. Thus, the steel pipe and the coupling are connected to each other. An integral-type threaded joint is constituted by a pair of steel pipes as tubular goods that are to be connected to each other, without a separate coupling being used. In this case, each steel pipe includes a male threaded portion formed on the outer periphery at one end thereof and a female threaded portion formed on the inner periphery at the other end thereof. Thus, the one steel pipe and the other steel pipe are connected to each other.

In general, the joint portion at the tubular end where a male threaded portion is disposed is referred to as a pin because it includes an element that is inserted into a female threaded portion. On the other hand, the joint portion at the tubular end where a female threaded portion is disposed is referred to as a box because it includes an element that receives a male threaded portion. A pin and a box both have a tubular shape because they are constituted by end portions of tubular goods.

As threaded joints for steel pipes, threaded joints including threaded portions constituted by buttress threads or round threads specified by API (American Petroleum Institute) standards are generally used.

As for the API buttress threads, most typical 5 TPI (five threads per inch) threads, for example, have the following principal dimensional and shape characteristics. The flank angle of the sloping surfaces (hereinafter referred to as "load flanks") which are in contact with each other in a made-up state is 3° with respect to a plane perpendicular to the joint axis (pipe axis). The flank angle of the sloping surfaces (hereinafter referred to as "stabbing flanks") which are located opposite from the load flanks is 10° with respect to a plane perpendicular to the joint axis (pipe axis). The thread height is 1.575 mm. The thread width is approximately 2.5 mm. The stabbing flanks are not in contact with each other in a made-up state. Between the stabbing flanks, clearances of approximately 0.025 mm to 0.178 mm in the pipe axis direction are provided depending on the sizes of the oil country tubular goods.

API buttress threads have load flanks that are inclined at a positive angle, with the load flank angle being 3°. For this reason, there is a risk of the occurrence of jump-out, a phenomenon in which threads become disengaged when very high tensile loads have been applied. Furthermore, API buttress threads are typically configured such that thread clearances are provided only between the stabbing flanks with the thread clearances being small. Thus, during make-up, a lubricant that has been applied can be trapped between the threads and become very highly pressurized temporarily, with the result that the torque required for screwing becomes excessively high or unstable.

Premium threaded joints of recent years, which have improved strength, sealing performance, and the like compared with those API standard threaded joints, are increasingly employing suitably modified buttress threads in order to overcome the above disadvantages of API buttress threads. For example, load flanks are configured to have a negative flank angle in order to prevent jump-out. Further, in order to prevent the increase of pressure of the lubricant, the threads are configured such that clearances are provided also between thread crests and opposing thread roots in a made-up state.

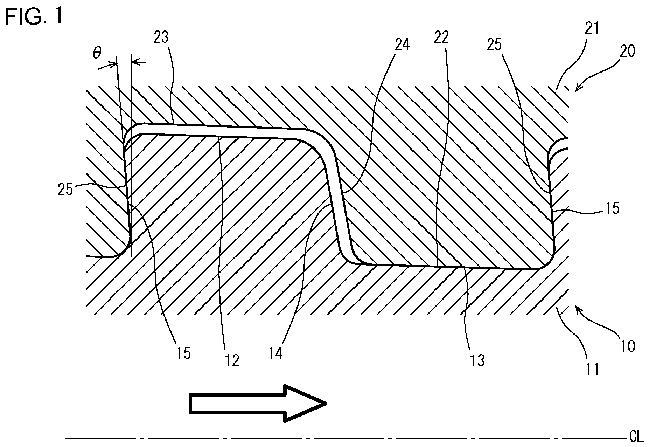

FIG. 1 is a longitudinal sectional view showing an example of modified buttress threads in a conventional premium threaded joint. In FIG. 1, the direction in which the screwing of the pin 10 onto the box 20 advances is indicated by an outlined arrow.

The pin 10 includes a male threaded portion 11, and the box 20 includes a female threaded portion 21 into which the male threaded portion 11 of the pin 10 is screwed. The male threaded portion 11 includes flat crests 12, flat roots 13, stabbing flanks 14, and load flanks 15 located opposite from the stabbing flanks. The female threaded portion 21 includes flat crests 22 facing the roots 13 of the male threaded portion 11, flat roots 23 facing the crests 12 of the male threaded portion 11, stabbing flanks 24 facing the stabbing flanks 14 of the male threaded portion 11, and load flanks 25 facing the load flanks 15 of the male threaded portion 11.

In a made-up state, the male threaded portion 11 of the pin 10 and the female threaded portion 21 of the box 20 engage in intimate contact, with the load flanks 15 being in contact with the load flanks 25 and the roots 13 of the male threaded portion 11 being in contact with the crests 22 of the female threaded portion 21. On the other hand, the crests 12 of the male threaded portion 11 and the roots 23 of the female threaded portion 21 are not in contact with each other during make-up as well as in a made-up state, with clearances being provided therebetween. Also, the stabbing flanks 14 are not in contact with the stabbing flanks 24 in a made-up state, with thread clearances being provided therebetween.

Although not shown in FIG. 1, the pin 10 and the box 20 each include a shoulder portion (torque shoulder). The shoulder portions are brought into contact and pressed against each other by the screwing of the pin 10 and serve as stoppers for restricting the screwing of the pin 10. Furthermore, the shoulder portions serve to impart the so-called thread tightening axial force to the load flanks 15, 25 in a made-up state.

The threads shown in FIG. 1 is almost the same as API buttress threads except that the flank angle θ of the load flanks 15, 25 is -3° and thread clearances of approximately 0.2 mm are provided between the crests 12 of the male threaded portion 11 and the roots 23 of the female threaded portion 21.

Typically, at a work site of an oil well, a platform and derrick is placed over the hole of the well, and a box having a female threaded portion, for example, is held on the platform. A steel pipe as a pin having a male threaded portion is lifted over the box held on the platform, and then the steel pipe is moved downward and screwed.

A grease compound, which is a lubricant, is applied to the threaded portions of the pin and the box, and they are made up using a dedicated make-up machine referred to as a power tong.

The threaded portions are configured such that, as the screwing progresses, the roots of the male threaded portion and the crests of the female threaded portion come into interference (contact) with each other, so that the tightening torque gradually increases as the screwing progresses. Then, upon abutment of the shoulder portions, rotational resistance to screwing rapidly increases, so that the tightening torque rises sharply. This phenomenon, in which shoulder portions are abutted against each other, is referred to as shouldering, and the tightening torque at the moment of shouldering is referred to as shouldering torque.

When the screwing is continued after shouldering occurs, shoulder portions undergo plastic deformation, so that the tightening torque no longer increases or rapidly decreases. The tightening torque at the moment when this phenomenon occurs is referred to as overtorque. When make-up is completed with a tightening torque that is in a range between the shouldering torque and the overtorque, connection of a premium threaded joint can be placed in an optimal condition. That is, a suitable axial tightening force is generated within the threaded joint, causing firm engagement of the threads which will not be easily loosened. Also, in the case where the pin and the box have metal-to-metal seal portions, the seal portions will have an interference fit as designed and will provide sealing performance. Therefore, a thread make-up operation at a work site of an oil well is carried out while monitoring the tightening torque, for which a target torque is appropriately set to be in a range between the shouldering torque and the overtorque.

If, for some reason, the tightening torque increases abnormally and reaches the target torque before shouldering actually occurs, the make-up is terminated while being in a condition of insufficient tightening so to speak. This phenomenon is referred to as high shouldering (a problem of the shouldering torque becoming higher than a target torque).

In addition to the above-described techniques for improving strength, sealing performance, and the like of threaded joints for steel pipes, techniques of using a solid or semi-solid lubricant coating or a solid corrosion protective coating in place of a grease compound have been proposed in order to address environmental regulations of recent years and the need for more efficient make-up operations.

WO 2007/042231 (Patent Literature 1) discloses a threaded joint provided with a thin, non-tacky lubricant coating formed on the threaded portions of the pin and the box. This lubricant coating is formed of a solid matrix exhibiting plastic or viscoplastic rheological behavior (flow properties) and solid lubricant particles suspended therein. The matrix preferably has a melting point in the range of 80 to 320°C, and is formed into a coating by spray coating in a melted condition (hot melt spraying), thermal spray coating using powders, or spray coating in the form of a water based emulsion. The coating composition used in the hot melt method contains, for example, polyethylene as a thermoplastic polymer, a wax (such as carnauba wax) and a metal soap (such as zinc stearate) as lubricating components, and a calcium sulfonate as a corrosion inhibitor.

WO 2009/072486 (Patent Literature 2) discloses a threaded joint for steel pipes in which the pin and the box have different solid coatings formed on the threaded portions. The coating of the pin is a solid corrosion protective coating based on a UV-curable resin and the coating is preferably transparent. The coating of the box is a solid lubricant coating which exhibits plastic or viscoplastic rheological behavior and is formed by a hot melt method, wherein the coating is formed of a composition preferably containing a thermoplastic polymer, a wax, a metal soap, a corrosion inhibitor, a water-insoluble liquid resin, and a solid lubricant.

The solid lubricant coating and the solid corrosion protective coating are both in a semi-solid condition with plastic or viscoplastic flow properties during application. They are applied to the threaded joint using a brush, a spray device, or the like so as to form a coating having a thickness as uniform as possible. The applied lubricants are each subjected to a hardening process (cooling, UV irradiation, etc.) suitable for the properties of each coating and solidify to form solid coatings.

### CITATION LIST

### PATENT LITERATURE

Patent Literature 1: International Publication No. WO2007/042231
Patent Literature 2: International Publication No. WO2009/072486

### SUMMARY OF INVENTION

### TECHNICAL PROBLEM

However, as evidenced by the later-described results of research and observation by the present inventors, the above coatings actually have a non-uniform thickness distribution by the time they solidify after application to the threaded portions. Specifically, the coatings have a smaller thickness at convex corner portions of the threads and a larger thickness at concave fillet portions of the roots. In the case of buttress threads, which have flat crests and flat roots, the coating thickness is particularly large at a central region of each crest, and the coating thickness is also large at a central region of each root although it is not as large as that at the central region of the crest. Such a thickness distribution of the coating is maintained after solidification, and therefore the resulting solid coating has a non-uniform thickness.

If the thickness of a solid coating is too thin, the base metal of the threaded portion will become exposed as a result of the sliding movement, leading to the occurrence of galling, during make-up of the threaded joint. That is, too thin a solid coating does not function as a lubricant coating. Thus, solid coatings need to have a predetermined or greater thickness. However, when a lubricant is applied with the intention of obtaining a sufficient coating thickness at the thread corner portions, where the thickness of the coating is thinnest, then the coating thickness in the other regions, particularly at the central region of each crest, becomes excessively thick. A thick solid coating after solidification easily delaminates and thus has low adhesion and durability properties.

Furthermore, in the case of modified buttress threads provided with thread clearances between the crests of the male threaded portion and the opposing roots of the female threaded portion, an excessively thick solid coating formed on the crests of the male threaded portion results in filling the clearances. Such a situation interferes with smooth screwing rotation during make-up, which can cause irregularities (humping, plateau) in tightening torque versus turn charts and can cause an abnormal increase in shouldering torque, which leads to high shouldering. A tightening torque versus turn chart is a graph showing torque reaction forces during the course of make-up, with the ordinate representing the tightening torque and the abscissa representing the number of tightening turns. This chart is also referred to as a torque chart.

As described above, many problems arise when a solid coating has a non-uniform thickness. However, Patent Literatures 1 and 2 describe nothing about the disadvantages that can be caused by a non-uniform thickness of a solid coating, and they do not pay any attention to forming a uniform solid coating. Furthermore, while there are numerous technologies, other than Patent Literatures 1 and 2, concerning solid coatings for threaded joints for steel pipes, none of them discusses solutions to the above problems that can be caused by a non-uniform coating thickness.

An object of the present invention is to provide a threaded joint for steel pipes configured so that the occurrence of galling and an abnormal make-up torque can be prevented during make-up even when the threaded portions have a solid coating thereon.

### SOLUTION TO PROBLEM

A threaded joint for steel pipes according to an embodiment of the present invention includes: a tubular pin having a tapered male threaded portion; and a tubular box having a tapered female threaded portion, the pin and the box being made up by screwing the male threaded portion into the female threaded portion.

The threaded joint includes a solid coating formed on at least one of a surface of the male threaded portion and a surface of the female threaded portion, the solid coating having fluidity during application and being cured after the application.

The threaded joint has one of the following configurations in a made-up state:
clearances are provided between crests of the male threaded portion and roots of the female threaded portion which face the crests of the male threaded portion, the crests and the roots being flat surfaces;
clearances are provided between roots of the male threaded portion and crests of the female threaded portion which face the roots of the male threaded portion, the roots and the crests being flat surfaces; or
clearances are provided between crests of the male threaded portion and roots of the female threaded portion which face the crests of the male threaded portion, the crests and the roots being flat surfaces, and also, clearances are provided between roots of the male threaded portion and crests of the female threaded portion which face the roots of the male threaded portion, the roots and the crests being flat surfaces.

In the threaded joint: among the flat surfaces provided with the clearance, the flat surfaces on which the solid coating is to be formed have at least one helical groove previously formed therein, the helical groove having a lead angle equal to a lead angle of threads; and the groove has a maximum depth of at least 30 µm, the depth being at most one-fifth of a height of the threads.

The above threaded joint may have the following configuration. The male threaded portion and the female threaded portion each include crests, roots, stabbing flanks, and load flanks.

The above threaded joint may have the following configuration. The solid coating is formed on the male threaded portion; the clearances are provided between the flat crests of the male threaded portion and the flat roots of the female threaded portion; and the groove is formed in the crests of the male threaded portion.

Alternatively, the above threaded joint may have the following configuration. The solid coating is formed on the male threaded portion; the clearances are provided between the flat roots of the male threaded portion and the flat crests of the female threaded portion; and the groove is formed in the roots of the male threaded portion.

Alternatively, the above threaded joint may have the following configuration. The solid coating is formed on the male threaded portion; the clearances are provided between the flat crests of the male threaded portion and the flat roots of the female threaded portion and also between the flat roots of the male threaded portion and the flat crests of the female threaded portion; and the groove is formed in the crests of the male threaded portion and in the roots thereof.

Alternatively, the above threaded joint may have the following configuration. The solid coating is formed on the female threaded portion; the clearances are provided between the flat crests of the male threaded portion and the flat roots of the female threaded portion; and the groove is formed in the roots of the female threaded portion.

Alternatively, the above threaded joint may have the following configuration. The solid coating is formed on the female threaded portion; the clearances are provided between the flat roots of the male threaded portion and the flat crests of the female threaded portion; and the groove is formed in the crests of the female threaded portion.

Alternatively, the above threaded joint may have the following configuration. The solid coating is formed on the female threaded portion; the clearances are provided between the flat crests of the male threaded portion and the flat roots of the female threaded portion and also between the flat roots of the male threaded portion and the flat crests of the female threaded portion; and the groove is formed in the roots of the female threaded portion and in the crests thereof.

In addition, the above threaded joint may have the following configuration. In a made-up state, the stabbing flanks of the male threaded portion and the stabbing flanks of the female threaded portion which face the stabbing flanks of the male threaded portion are not in contact with each other.

Furthermore, the above threaded joint may have the following configuration. The groove has a cross-sectional shape that is trapezoidal, rectangular, triangular, arcuate, or elliptically arcuate.

The above threaded joint may have the following configuration. The groove has rounded corner portions on both ends thereof in cross section, the rounded corner portions having a radius of curvature that is smaller than a radius of curvature of rounded corner portions between the crests and the load flanks.

The above threaded joint may preferably have the following configuration. In each flat surface having the groove, the groove has a width in total of at least one-third of a full width of the flat surface.

The above threaded joint may have the following configuration. The pin and the box each include a shoulder portion, the shoulder portions being brought into contact with each other in the process of screwing.

Furthermore, the above threaded joint may have the following configuration. The pin and the box each include a seal portion, the seal portions being in contact with each other in a made-up state.

Furthermore, the above threaded joint may have the following configuration. The male threaded portion of the pin and the female threaded portion of the box are each constituted by two-step threads or three-step threads having two or three separate threaded portions along the pipe axis.

### ADVANTAGEOUS EFFECTS OF INVENTION

A threaded joint for steel pipes of the present invention has an advantage in that the occurrence of galling and an abnormal make-up torque can be prevented during make-up even when the threaded portions have a solid coating thereon.

### BRIEF DESCRIPTION OF DRAWINGS

[FIG. 1] FIG. 1 is a longitudinal sectional view showing an example of modified buttress threads that are employed in threaded portions of a conventional premium threaded joint.
[FIG. 2] FIG. 2 is a longitudinal sectional view showing a case in which a coating has been formed on modified buttress threads of a male threaded portion of a pin.
[FIG. 3] FIG. 3 is a longitudinal sectional view showing a case in which a coating has been formed on a male threaded portion of a pin, in a threaded joint according to a first embodiment of the present invention.
[FIG. 4] FIG. 4 is a longitudinal sectional view showing a case in which a coating has been formed on a male threaded portion of a pin, in a threaded joint according to a second embodiment of the present invention.
[FIG. 5] FIG. 5 is a longitudinal sectional view showing a case in which a coating has been formed on a male threaded portion of a pin, in a threaded joint according to a third embodiment of the present invention.
[FIG. 6] FIG. 6 is a longitudinal sectional view showing a case in which a coating has been formed on a male threaded portion of a pin, in a threaded joint according to a fourth embodiment of the present invention.
[FIG. 7] FIG. 7 is a longitudinal sectional view showing a case in which a coating has been formed on a female threaded portion of a box, in a threaded joint according to a fifth embodiment of the present invention.
[FIG. 8] FIG. 8 is a longitudinal sectional view showing a case in which a coating has been formed on a female threaded portion of a box, in a threaded joint according to a sixth embodiment of the present invention.
[FIG. 9] FIG. 9 is a longitudinal sectional view showing a case in which a coating has been formed on a male threaded portion of a pin, in a threaded joint according to a seventh embodiment of the present invention.
[FIG. 10] FIG. 10 is a longitudinal sectional view showing an exemplary threaded portion of a threaded joint according to an eighth embodiment of the present invention, in which high torque threads are employed.
[FIG. 11] FIG. 11 is a longitudinal sectional view showing a case in which a coating has been formed on a male threaded portion of a pin, in a conventional threaded joint employing high torque threads.
[FIG. 12] FIG. 12 is a longitudinal sectional view showing a case in which a coating has been formed on the male threaded portion of the pin, in the threaded joint employing high torque threads according to the eighth embodiment of the present invention.
[FIG. 13] FIG. 13 is a longitudinal sectional view of an exemplary threaded joint according to the present invention.
[FIG. 14] FIG. 14 is a longitudinal sectional view of an exemplary threaded joint according to the present invention.

### DESCRIPTION OF EMBODIMENTS

Firstly, the present inventors conducted extensive research and observation, focusing on a pre-solidified coating applied to a threaded portion for formation of a solid coating, and investigated the mechanism that causes non-uniformity of a coating thickness distribution and the tendency of the thickness distribution.

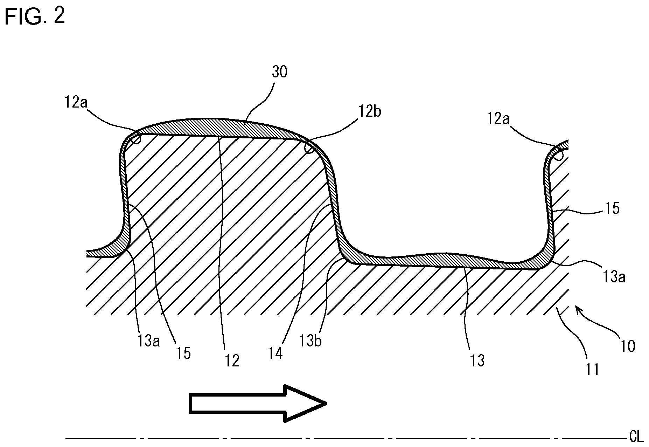

FIG. 2 is a longitudinal sectional view showing a case in which a coating has been formed on the surface of modified buttress threads that are employed in a conventional premium threaded joint. A male threaded portion 11 of a pin 10 shown in FIG. 2 is one employed in the conventional threaded joint shown in FIG. 1, and it forms a pair with a female threaded portion of the box. In a made-up state, clearances are provided between crests 12 of the male threaded portion 11 and roots of the female threaded portion, and clearances are provided between stabbing flanks 14 of the male threaded portion 11 and stabbing flanks of the female threaded portion. In the meantime, roots 13 of the male threaded portion 11 are in contact (interference) with crests of the female threaded portion. Load flanks 15 of the male threaded portion 11 and load flanks of the female threaded portion are brought into contact with each other by the axial tightening force. The crests 12 and the roots 13 are flat surfaces.

A coating having fluidity as described above is applied to the male threaded portion 11 of the pin 10. This coating is cured to form a solid coating 30. As shown in FIG. 2, the solid coating 30 has the smallest thickness at thread corner portions, namely, a rounded corner portion 12a that connects the crest 12 with the load flank 15 and a rounded corner portion 12b that connects the crest 12 with the stabbing flank 14. The solid coating 30 has the largest thickness at fillet portions on the root, namely, a rounded fillet portion 13a that connects the root 13 with the load flank 15 and a rounded fillet portion 13b that connects the root 13 with the stabbing flank 14. The solid coating 30 has the second smallest thickness at the load flank 15 and the stabbing flank 14. The solid coating 30 has the second largest thickness at a central region of the crest 12. The coating thickness at a central region of the root 13 is large although it is not as large as at the central region of the crest 12.

Such non-uniform thickness distribution of a solid coating occurs for the following reasons. A coating before it solidifies is in a semi-solid condition with fluidity and therefore flows under surface tension. The effect of surface tension on a coating in a semi-solid condition is exerted in directions such that the free energy of the coating interface exposed to the atmosphere becomes smaller. In other words, surface tension acts in directions to reduce the surface area of the free surface of a coating as much as possible. In the meantime, the surface of a threaded portion to which a coating is to be applied is an uneven surface as a surface of threads. Thus, a coating in a semi-solid condition applied to a threaded portion flows before solidification under the effect of surface tension in such a manner that the surface area of the coating becomes smaller at surface regions having a curvature such as thread corner portions and root fillet portions, even if the coating has been applied as uniformly as possible using a brush, a spray device, or the like. Also, gravity acts to some extent on a coating in a semi-solid condition applied to a threaded portion. These influences result in non-uniformity of a coating thickness distribution.

The final coating thickness distribution depends on the balance between surface tension and gravity as described above and the fluidity (viscosity) and wettability of the coating in a semi-solid condition. In addition, when application of the coating is carried out by rotating the pin, centrifugal forces and the like also have an influence on the coating thickness distribution. While the crest and the root are both flat surfaces, the coating has a very large thickness at the central region of the crest because the coating running off from the corner portions at both ends of the thread builds up there. On the other hand, at the central region of the root, the coating thickness is not as large as at the central region of the crest because the coating is absorbed by the fillet portions at both ends of the root. This situation also occurs in the case of a female threaded portion of a box.

The coating thickness distribution can vary greatly depending on the properties of the coating to be applied in a semi-solid condition. For example, when a coating having properties close to those of the coating disclosed in Patent Literature 1 is employed, the coating thickness at the central region of the crest will exceed 100 µm if a coating thickness of at least about 10 to 20 µm is to be obtained at thread corner portions, where coatings tend to have a smallest thickness, in order to avoid galling or the like during make-up of the threaded joint.

The present inventors attempted to reduce the non-uniformity of the coating thickness distribution by adjusting the coating properties that affect the fluidity and wettability of the coating in a semi-solid condition. However, they have come to the conclusion that it is impossible to effectively reduce the non-uniformity of the coating thickness distribution merely by adjusting the coating properties, which has its limits.

Then, the present inventors turned their attention to the fact that a major factor that causes the non-uniformity of a coating thickness distribution is surface tension, based on the mechanism by which the coating thickness distribution occurs, and they have made the following findings. Surface tension causes pressure differences proportional to the curvature of the interface (inversely proportional to the radius of curvature) at the interface. The pressure differences provide the driving force that causes a coating to flow. The coating in a semi-solid condition flows until the driving force and body forces such as gravity are balanced, and as a result, a non-uniform coating thickness distribution occurs. In other words, the driving force that causes the non-uniform thickness distribution of a coating greatly depends on the curvature of the interface, i.e., the profile of the surface to which the coating is to be applied. Accordingly, it can be appreciated that control of the thickness distribution of a solid coating can be achieved by providing the surface to which the coating is to be applied with a suitable shape.

From the above findings, the present inventors conceived of the idea of actively utilizing the surface tension that acts on a coating applied to a threaded portion so that it is possible to reduce the non-uniformity of the coating thickness distribution. For example, a discussion is given of the case where the solid coating 30 is formed on the male threaded portion 11 of the pin 10 and the clearances are provided between the flat crests 12 and the flat roots of the female threaded portion in a made-up state as shown in FIG. 2. In this case, by previously forming a shallow groove in a central region of the flat crest 12, the coating in a semi-solid condition on the crest 12 will be allowed to spread in directions such that the coating thickness becomes thinner, so that it will become thinner. The groove may be a helical groove having a lead angle equal to that of the threads of the male threaded portion 11. As described above, when the crest 12 is a flat surface, the thickness of a solid coating tends to be larger there. Too large a thickness of the coating will have adverse effects on its adhesion and durability properties as well as on the tightening torque during make-up of the threaded joint. Thus, it is very useful to make the thickness of the solid coating at the crest 12 thinner.

Next, a discussion is given of the case where a solid coating is formed on the male threaded portion 11 of the pin 10 likewise but the clearances are provided between the flat roots thereof and the flat crests of the female threaded portion in a made-up state. In this case, too large a thickness of the solid coating at the root will have adverse effects on its adhesion and durability properties, and also will have adverse effects on the tightening torque during make-up of the threaded joint. When the root is a flat surface, the thickness of a solid coating there tends to be larger although it is not as large as at the crest as described above. However, by previously forming a shallow groove in a central region of the root, the semi-solid coating will be allowed to spread in directions such that the coating thickness becomes thinner, so that it will become thinner. The groove may also be a helical groove having a lead angle equal to that of the threads of the male threaded portion 11.

These discussions also apply to cases where a solid coating is formed on the female threaded portion of the box. That is, in the case where a solid coating is formed on the female threaded portion and the clearances are provided between the flat crests of the male threaded portion and the flat roots of the female threaded portion in a made-up state, a shallow groove may be previously formed in a central region of the flat roots of the female threaded portion. Likewise, in the case where a solid coating is formed on the female threaded portion as well but the clearances are provided between the flat roots of the male threaded portion and the flat crests of the female threaded portion in a made-up state, a shallow groove may be previously formed in a central region of the flat crests of the female threaded portion. These grooves may be helical grooves having a lead angle equal to that of the threads of the female threaded portion.

Here, the above-described grooves may be formed with a variety of shapes, widths, depths, and the like. Firstly, a discussion is given of the case where the solid coating is formed on the male threaded portion, the clearances are provided between the crests of the male threaded portion and the roots of the female threaded portion in a made-up state, and the groove is provided in the crest of the male threaded portion. The threaded joint in this case is a premium threaded joint employing modified buttress threads. In a made-up state, the roots of the male threaded portion are in contact (interference) with the crests of the female threaded portion, and also the load flanks of the two portions are brought into contact with each other by the axial tightening force while clearances are provided between the stabbing flanks of the two portions.

If the groove provided in the crest of the male threaded portion is too deep, the stiffness of the threads themselves will be significantly decreased and therefore a decrease in the strength properties of the threaded joint will be inevitable. Furthermore, providing too deep a groove will require much effort in thread machining and therefore will decrease the threaded joint manufacturability. Furthermore, if the groove is too deep, a larger amount of the semi-solid coating will be drawn into the groove and therefore the amount of the coating around the groove will become insufficient. When this occurs, a desired coating thickness cannot be obtained and therefore the probability of galling or the like will be increased. In addition, the amount of useless coating filling the groove will be increased, which is economically disadvantageous.

As a simple idea, one may conceive of enlarging the clearances at the crests to be greater than the thickness of the thick coating rather than providing a groove in the crests. The enlargement of the clearances will prevent them from being filled with the thick coating. Thus, it is anticipated that the above-described problems such as irregularities in torque charts and high shouldering can be prevented.

However, threaded joints for steel pipes must be designed within limited dimensions because of the very tight dimensional constraints for them. Thus, enlargement of the clearances at the crests will involve additional dimensional changes. As a result, new problems will arise. For example, if it becomes necessary to reduce the thread height of the male threaded portion, then the engagement strength of the threads will be reduced. Conversely, if it becomes necessary to increase the thread height of the female threaded portion, the cross-sectional area of the critical section of the box will be reduced. Consequently, the tensile load that the threaded joint can withstand will be reduced and therefore the strength properties of the threaded joint will be decreased. Here, the cross-sectional area of the critical section of the box refers to a cross-sectional area at the thread root in the end region of the engaged threaded portion. The magnitude of the tensile load that a threaded joint can withstand depends on the size of the cross-sectional area of the critical section.

Furthermore, merely enlarging the clearances at the crests does not inhibit the occurrence of the non-uniform thickness distribution of the coating at all, and therefore it does occur. As a result, the problem of the tendency for the coating to delaminate cannot be solved at all.

In view of these, the present inventors conducted intense research. Consequently, they have found that the depth of the groove in the case where the groove is provided in the crests of the male threaded portion need not be larger than the clearances at the crests, although depending on the properties of the coating to be applied in a semi-solid condition. When the depth of the groove formed in the crests is about several to twenty times the minimum thickness required for the coating, the semi-solid coating on the crests will be allowed to spread under surface tension in directions such that the coating thickness becomes thinner, so that it will become thinner. More specifically, the groove formed in the crests may have a depth of 30 µm or more. In the meantime, the upper limit of the depth of the groove may be at most one-fifth of the thread height. With this, the stiffness of the threads themselves can be ensured. In addition, the coating thickness around the groove will not become excessively thin, and therefore it is possible to inhibit the reduction of galling resistance. Furthermore, wasteful consumption of the coating can be prevented.

Furthermore, the present inventors made various studies on the cross-sectional shape of the groove in the case where it is provided in the crests of the male threaded portion. Consequently, they have found that, when the cross-sectional shape of the groove is trapezoidal, rectangular, triangular, arcuate, elliptically arcuate, or a combination of any of these, a certain advantage will be obtained for thinning the coating at the crests. In any of these shapes, rounded corner portions are formed on both ends of the groove in cross section, with the rounded corner portions having a smaller radius of curvature. By virtue of this, surface tension acts greatly on the semi-solid coating on the crest in such a manner as to make the coating thickness thinner at the rounded corner portions on both ends of the groove in cross section. In association with this, the high surface tension acts in directions to make the coating thickness thinner by drawing in the coating near the rounded corner portions, particularly the coating on the central region of the crest. As a result, the coating thickness on the crests can be uniformly thin. Meanwhile, an extreme thinning of the coating is inhibited at thread corner portions, namely, a rounded corner portion that connects the crest with the load flank and a rounded corner portion that connects the crest with the stabbing flank.

Such effect is produced noticeably when the cross-sectional shape of the groove is trapezoidal. The reason is that the effect of surface tension is particularly large when the cross-sectional shape of the groove is trapezoidal because the surface profile steeply changes at the rounded corner portions on both ends of the groove in cross section.

The radius of curvature of the rounded corner portions at both ends of the groove in cross section may be as small as possible because if it is too large, the above advantage is less likely to be obtained. In particular, in order to effectively inhibit an extreme thinning of the coating at the thread corner portions as well, the radius of curvature of the rounded corner portions at both ends of the groove may be smaller than the radii of curvature at both rounded corner portions of the thread (the rounded corner portion between the crest and the load flank and the rounded corner portion between the crest and the stabbing flank). Normally, of the two rounded corner portions of a thread, the rounded corner portion between the crest and the load flank has a smaller radius of curvature. Thus, the radius of curvature of the rounded corner portions on both ends of the groove may be smaller than this. However, when the radius of curvature is too small, the manufacturability will rather be compromised and quality control becomes difficult. Thus, in actual implementation, the radius of curvature of the rounded corner portions on both ends of the groove is preferably approximately equal to the depth of the groove.

In addition, the present inventors made various studies on the width of the groove and the number thereof in the case where the groove is provided in the crests of the male threaded portion. As a result, they have found that, when one groove is provided, the width of the groove on the crest may be at least one-third of the full width of the crest so as to obtain the advantage for thinning the coating at the crests. In this case, it would be better if the width of the groove be at most two-thirds of the full width of the crest. With this, a severe decrease in thread stiffness will not occur. Furthermore, an increased number of grooves such as two grooves or three grooves will produce the same advantages. In such cases, the total of the widths of the plurality of grooves may be at least one-third of the full width of the crest, and it would be better if it is at most two-thirds thereof.

Next, the present inventors made studies on whether the same advantages can be achieved in the case where the solid coating is formed on the female threaded portion. Here, firstly, a discussion is given of a premium threaded joint employing modified buttress threads as in the above case. In this threaded joint, in a made-up state, the roots of the male threaded portion and the crests of the female threaded portion are in contact (interference) with each other while load flanks of the two portions are brought into contact with each other by the axial tightening force, and clearances are provided between the crests of the male threaded portion and the roots of the female threaded portion, and between the stabbing flanks of the two portions.

In this case, the central region on the crest of the female threaded portion, where the coating has a larger thickness, slidingly moves in contact (interference) with the root of the male threaded portion in a later part of the make-up process. Thus, the solid coating on the crest of the female threaded portion remains between the crest of the female threaded portion and the root of the male threaded portion during the process of make-up even if some delamination occurs, and produces lubrication effects. Since spaces are formed between the load flanks when the stabbing flanks are in contact with each other during make-up, excess portions of the solid coating delaminated from the crest of the female threaded portion partially accumulate in the spaces between the load flanks or between the stabbing flanks. Thus, it is very unlikely that the solid coating even fills in the clearance between the root of the female threaded portion and the crest of the male threaded portion.

That is, in this case, at the root of the male threaded portion and the crest of the female threaded portion that come into contact (interference) with each other, even if the solid coating at the crest has a large thickness, it will not have such adverse effects as those of a thick solid coating formed on the crest of the male threaded portion. Therefore, it can be assumed that, in this case, the above-described groove may not necessarily be provided in the crest of the female threaded portion.

In the meantime, at the root of the female threaded portion, the thickness of the coating is relatively large although it is not as large as at the crest. In this case, a groove similar to the groove as described above may be previously formed in the root of the female threaded portion so that it is possible to keep the thickness of the solid coating at the root thin by the above-described mechanism. Requirements for the groove such as the shape, width, depth, and the like are the same as those for the above-described groove.

The above threaded joint has a configuration in which, in a made-up state, the roots of the male threaded portion and the crests of the female threaded portion are in contact (interference) with each other, and clearances are provided between the crests of the male threaded portion and the roots of the female threaded portion. Some threaded joints have a reverse configuration in which, in a made-up state, the crests of the male threaded portion and the roots of the female threaded portion are in contact (interference) with each other, and clearances are provided between the roots of the male threaded portion and the crests of the female threaded portion. Some others have a configuration in which, in a made-up state, clearances are provided both between the crests of the male threaded portion and the roots of the female threaded portion and between the roots of the male threaded portion and the crests of the female threaded portion. In any of these configurations, the above-described groove may be previously formed in the surface on which the coating is to be formed and which is provided with a clearance in a made-up state.

Thus, excessive thickening of a solid coating can be inhibited by previously forming the above-described groove in the surface on which the solid coating (e.g., a solid lubricant coating, a solid corrosion protective coating, etc.) is to be formed and which is provided with a clearance in a made-up state, wherein the solid coating has fluidity during application and is cured after the application. This results in providing the solid coating with excellent adhesion and durability properties, which makes it possible to prevent galling as well as to prevent the occurrence of humping, plateau, high shouldering, or the like during make-up of the threaded joint.

The threaded joint for steel pipes of the present invention has been made based on the above findings. Hereinafter, preferred embodiments of the threaded joint for steel pipes according to the present invention will be described.

### [First Embodiment]

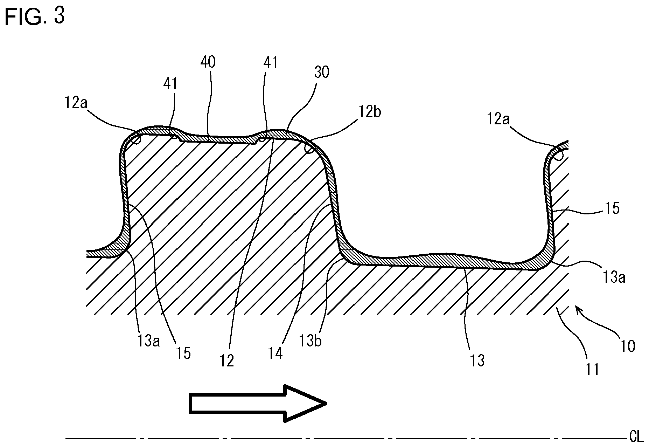

FIG. 3 is a longitudinal sectional view showing a case in which a coating has been formed on a male threaded portion of a pin, in a threaded joint according to a first embodiment of the present invention. The threaded joint shown in FIG. 3 is a premium threaded joint with tapered threaded portions constituted by modified buttress threads based on API buttress threads as with the premium threaded joint shown in FIG. 2, and is constructed of a pin 10 having a male threaded portion 11 and a box having a female threaded portion which forms a pair with the pin 10. In FIG. 3, the direction in which the screwing of the pin 10 onto the box advances is indicated by an outlined arrow.

The male threaded portion 11 of the pin 10 includes flat crests 12, flat roots 13, stabbing flanks 14 which are in leading positions in the screwing, and load flanks 15 located opposite from the stabbing flanks. On the other hand, although not shown, the female threaded portion includes flat crests facing the roots 13 of the male threaded portion, flat roots facing the crests 12 of the male threaded portion 11, stabbing flanks facing the stabbing flanks 14 of the male threaded portion 11, and load flanks facing the load flanks 15 of the male threaded portion 11.

Also, the male threaded portion 11 of the pin 10 has a rounded corner portion 12a that connects the crest 12 with the load flank 15 and a rounded corner portion 12b that connects the crest 12 with the stabbing flank 14. Furthermore, the male threaded portion 11 has a rounded fillet portion 13a that connects the root 13 with the load flank 15 and a rounded fillet portion 13b that connects the root 13 with the stabbing flank 14. On the other hand, although not shown, the female threaded portion has rounded fillet portions at both ends of the root corresponding to the rounded corner portions 12a, 12b of the male threaded portion 11. Furthermore, the female threaded portion has rounded corner portions at both ends of the thread corresponding to the rounded fillet portions 13a, 13b of the male threaded portion 11.

In a made-up state, clearances are provided between the crests 12 of the male threaded portion 11 and the roots of the female threaded portion, and clearances are provided between stabbing flanks 14 of the male threaded portion 11 and stabbing flanks of the female threaded portion. In the meantime, the roots 13 of the male threaded portion 11 are in contact (interference) with the crests of the female threaded portion. The load flanks 15 of the male threaded portion 11 and the load flanks of the female threaded portion are brought into contact with each other by the axial tightening force.

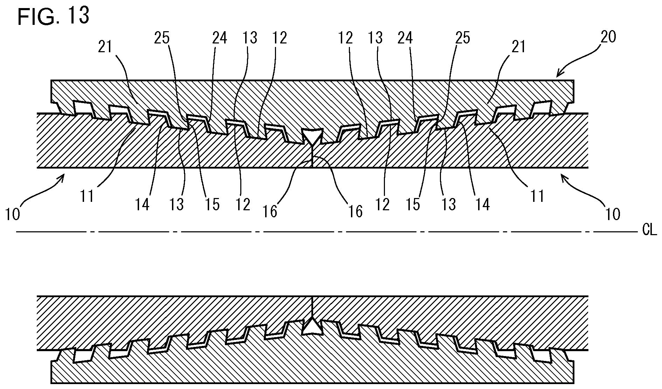

Although not shown in FIG. 3, the pin 10 and the box each include a shoulder portion that imparts the thread tightening axial force to the load flanks. In the case of a coupling-type threaded joint, for example, a configuration such that two paired pins 10 each have a shoulder portion at an end thereof may also be possible (see below-described FIG. 13). In this case, the shoulder portions of the pins 10 are abutted against each other, by which the axial tightening force is imparted.

A shallow groove 40 is previously formed in a central region of the crest 12 of the male threaded portion 11, the crest 12 being provided with a clearance in a made-up state. The groove 40 is composed of one helical groove having a lead angle equal to that of the threads of the male threaded portion 11. In the first embodiment, the groove 40 has a trapezoidal cross-sectional shape. The two ends of the groove 40 are connected to the flat surface of the crest 12 via rounded corner portions 41 having a smaller radius of curvature. Since the cross-sectional shape of the groove 40 is trapezoidal, the bottom surface of the groove 40 is a flat surface.

In the first embodiment, the solid coating 30 is formed on the male threaded portion 11 of the pin 10. The solid coating 30 has fluidity during application, and after the application, it is subjected to a hardening process to cure and solidify. Specifically, the solid coating 30 is semi-solid with plastic or viscoplastic flow properties during application, and is applied to a threaded joint using a brush, a spray device, or the like. The applied lubricant is subjected to a hardening process (e.g., cooling, UV irradiation, etc.) suitable for the properties of the coating, and solidifies. The solid coating may be of any type as long as it can flow under surface tension, gravity, or the like during the time between application and solidification, with the intended use thereof (e.g., for lubrication, for corrosion protection, for good appearance, etc.) being of no concern. In the meantime, solid coatings that do not flow before solidification such as an electrodeposited coating, a clad coating, or the like, are not included.

The solid coating 30 is formed with the groove 40 included in the crest 12. Prior to the solidification and formation of the solid coating 30, the coating in a semi-solid condition applied to the crest 12 spreads in directions such that the coating thickness becomes thinner, and does become thinner. This occurs because of the presence of the groove 40 in the crest 12 and the presence of the rounded corner portions 41 having a smaller radius of curvature at both ends of the groove 40, which cause surface tension to act greatly on the semi-solid coating on the crest 12 in such a manner as to make the coating thickness thinner.

Preferably, the depth of the groove 40 is deeper than the minimum thickness of the solid coating 30 necessary for it to provide its performance and is shallower than the clearance between the crest 12 and the opposing root of the female threaded portion. This is because, if the depth of the groove 40 is too shallow, the advantage of making the coating 30 on the crest 12 thinner will not be sufficiently achieved. On the other hand, if the depth of the groove 40 is too deep, the stiffness of the threads themselves will be decreased, which will lead to a decrease in the strength properties of the threaded joint.

For example, the depth of the groove 40 is deeper than three times the minimum thickness necessary for the solid coating 30 and is shallower than one half the clearance at the crest 12. Assuming that the minimum thickness of the solid coating 30 is 10 µm and the clearance at the crest 12 is 200 µm, the depth of the groove 40 is in the range of 30 µm to 100 µm.

More specifically, the depth of the groove 40 is preferably 30 µm or more. In the meantime, in order to ensure the stiffness of the threads themselves and ensure a sufficient coating thickness around the groove, the depth of the groove 40 is preferably at most one-fifth of the thread height.

In addition, the smaller the radius of curvature of the rounded corner portions 41 at both ends of the groove 40, the better. This is because, if the radius of curvature of the rounded corner portions 41 is too large, the advantage of making the coating 30 on the crest 12 thinner cannot be easily obtained, and further, it is impossible to effectively inhibit an extreme thinning of the coating at the thread corner portions (the rounded corner portion 12a between the crest 12 and the load flank 15 and the rounded corner portion 12b between the crest 12 and the stabbing flank 14). Thus, the radius of curvature of the rounded corner portions 41 at both ends of the groove 40 is preferably smaller than the radii of curvature of the two rounded corner portions of the thread, particularly the rounded corner portion 12a between the crest 12 and the load flank 15.

The width of the groove 40 is preferably at least one-third of the full width of the crest 12. This is because, if the width of the groove 40 is too narrow, the advantage of making the coating 30 on the crest 12 thinner will not be sufficiently achieved. In the meantime, the width of the groove 40 is preferably at most two-thirds of the full width of the crest 12. This is because, if the width of the groove 40 is too wide, a severe decrease in thread stiffness will occur.

### [Second Embodiment]

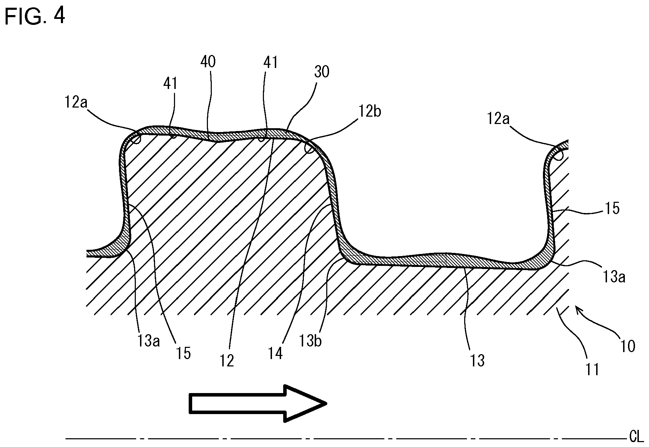

FIG. 4 is a longitudinal sectional view showing a case in which a coating has been formed on a male threaded portion of a pin, in a threaded joint according to a second embodiment of the present invention. The threaded joint shown in FIG. 4 is a variation of the threaded joint according to the first embodiment shown in FIG. 3, and descriptions redundant to those of the first embodiment will not be repeated where appropriate. The same applies to the later-described third to eighth embodiments.

In the threaded joint of the second embodiment, as shown in FIG. 4, the groove 40 formed in the crest 12 of the male threaded portion 11 has a triangular cross-sectional shape. In this case, the depth of the groove 40 is defined as the largest depth at a deepest, lowermost position.

The threaded joint of the second embodiment also produces advantageous effects similar to those of the first embodiment although the effects may not be as large as those of the first embodiment. The reason for this is that the effect of surface tension will not be as large as in the first embodiment because, with the cross-sectional shape of the grove 40 being triangular, the change in the surface profile is gentle at the rounded corner portions 41 on both ends of the groove 40 in cross section.

### [Third Embodiment]

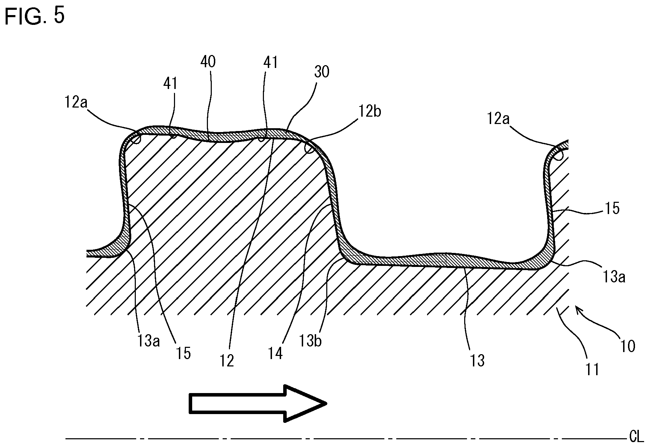

FIG. 5 is a longitudinal sectional view showing a case in which a coating has been formed on a male threaded portion of a pin, in a threaded joint according to a third embodiment of the present invention. In the threaded joint of the third embodiment, as shown in FIG. 5, the groove 40 formed in the crest 12 of the male threaded portion 11 has an arcuate cross-sectional shape. Since the cross-sectional shape of the groove 40 is arcuate, the bottom surface of the groove 40 is a curved surface. In this case, the depth of the groove 40 is defined as the largest depth at a deepest, lowermost position as with the second embodiment described above.

The threaded joint of the third embodiment also produces advantageous effects similar to those of the first embodiment although the effects may not be as large as those of the first embodiment. The reason for this is that, because of the arcuate cross-sectional shape of the groove 40, the effect of surface tension will not be as large as in the first embodiment for the same reasons as those in the second embodiment.

### [Fourth Embodiment]

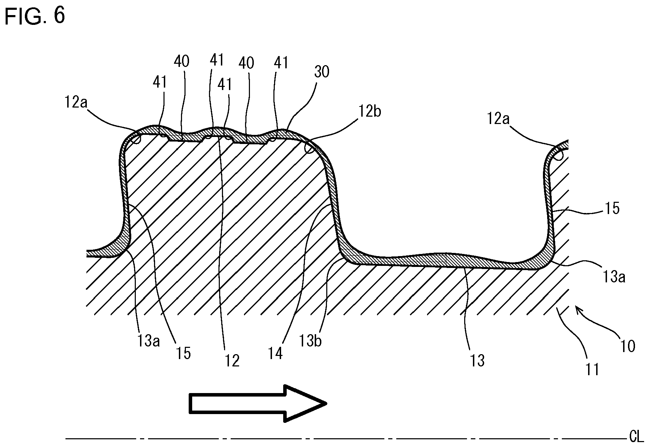

FIG. 6 is a longitudinal sectional view showing a case in which a coating has been formed on a male threaded portion of a pin, in a threaded joint according to a fourth embodiment of the present invention. In the threaded joint of the fourth embodiment, as shown in FIG. 6, the groove 40 formed in the crest 12 of the male threaded portion 11 has a trapezoidal cross-sectional shape as with the first embodiment described above, but two grooves 40 are provided. In this case, the groove 40 width with respect to the full width of the crest 12 is defined as the total of the widths of the two grooves 40.

The threaded joint of the fourth embodiment also produces advantageous effects similar to those of the first embodiment described above. The number of the grooves 40 may be three or more. In this case, the groove 40 width with respect to the full width of the crest 12 is defined as the total of the widths of the grooves 40 that have been formed. However, in view of the practicality of thread machining, the number of the grooves 40 is preferably up to three. Furthermore, the cross-sectional shape of the grooves 40 of the fourth embodiment may be changed to a triangular or arcuate shape as with the second or third embodiment described above.

### [Fifth Embodiment]

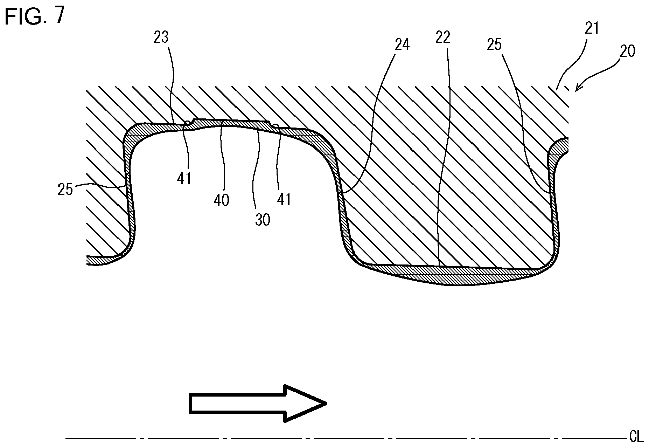

FIG. 7 is a longitudinal sectional view showing a case in which a coating has been formed on a female threaded portion of a box, in a threaded joint according to a fifth embodiment of the present invention. In the threaded joint of the fifth embodiment, as shown in FIG. 7, the coating 30 is formed on the female threaded portion 21 of the box 20, of the pin and the box 20. In this case, a shallow, trapezoidal groove 40 is previously formed as in the first embodiment described above, in a central region of the root 23 of the female threaded portion 21, the root 23 being provided with a clearance in a made-up state.

In the fifth embodiment, the solid coating 30 is formed with the groove 40 included in the root 23. Prior to the solidification and formation of the solid coating 30, the coating in a semi-solid condition applied to the root 23 spreads in directions such that the coating thickness becomes thinner and does become thinner because of the effect of surface tension as with the first embodiment described above.

The threaded joint of the fifth embodiment also produces advantageous effects similar to those of the first embodiment described above. The cross-sectional shape of the groove 40 of the fifth embodiment may be changed to a triangular or arcuate shape as with the second or third embodiment described above. The number of the grooves 40 in the fifth embodiment may be more than one as in the fourth embodiment described above.

### [Sixth Embodiment]

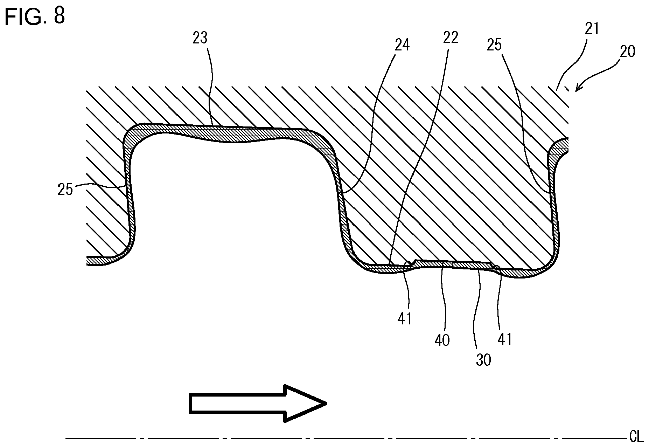

FIG. 8 is a longitudinal sectional view showing a case in which a coating has been formed on a female threaded portion of a box, in a threaded joint according to a sixth embodiment of the present invention. The threaded joint shown in FIG. 8, reversely to those of the first to fifth embodiments, have a configuration in which, in a made-up state, the crests of the male threaded portion and the roots 23 of the female threaded portion 21 are in contact (interference) with each other, and clearances are provided between the roots of the male threaded portion and the crests 22 of the female threaded portion 21.

In the threaded joint of the sixth embodiment, as shown in FIG. 8, the coating 30 is formed on the female threaded portion 21 of the box 20, of the pin and the box 20. In this case, a shallow, trapezoidal groove 40 is previously formed as in the first embodiment described above, in a central region of the crest 22 of the female threaded portion 21, the crest 22 being provided with a clearance in a made-up state.

In the sixth embodiment, the solid coating 30 is formed with the groove 40 included in the crest 22. Prior to the solidification and formation of the solid coating 30, the coating in a semi-solid condition applied to the crest 22 spreads in directions such that the coating thickness becomes thinner and does become thinner because of the effect of surface tension as with the first embodiment described above.

The threaded joint of the sixth embodiment also produces advantageous effects similar to those of the first embodiment described above.

### [Seventh Embodiment]

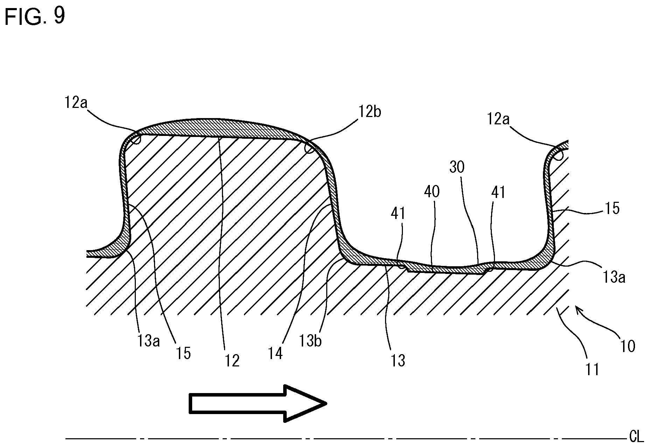

FIG. 9 is a longitudinal sectional view showing a case in which a coating has been formed on a male threaded portion of a pin, in a threaded joint according to a seventh embodiment of the present invention. The threaded joint of the seventh embodiment is a variation of the threaded joint of the sixth embodiment shown in FIG. 8 as configured from a viewpoint similar to that of the fifth embodiment shown in FIG. 7. That is, in the threaded joint of the seventh embodiment as shown in FIG. 9, the coating 30 is formed on the male threaded portion 11 of the pin 10, of the pin 10 and the box. In this case, a shallow, trapezoidal groove 40 is previously formed as in the fifth embodiment described above, in a central region of the root 13 of the male threaded portion 11, the root 13 being provided with a clearance in a made-up state.

The threaded joint of the seventh embodiment also produces advantageous effects similar to those of the first embodiment described above.

### [Eighth Embodiment]

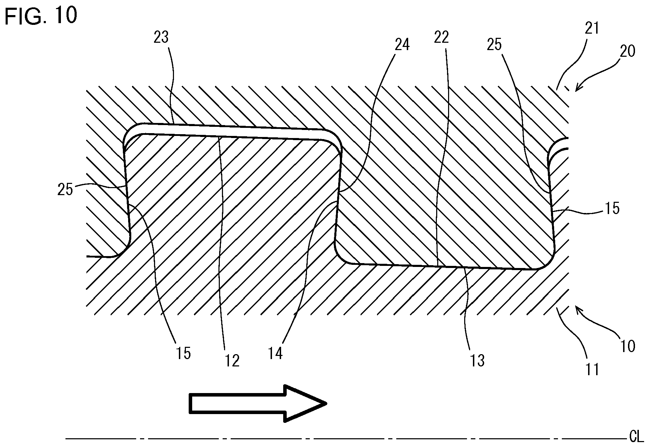

FIG. 10 is a longitudinal sectional view showing an exemplary threaded portion of a threaded joint according to an eighth embodiment of the present invention, in which high torque threads are employed. The threaded joint shown in FIG. 10 is a threaded joint employing so-called high torque threads, without including a shoulder portion, in which the threaded portions become self-locked along with the screwing of the pin 10 onto the box 20 to exhibit a high torque performance. In high torque threads, the thread width of the male threaded portion gradually decreases along the thread helix in the right-hand screw direction, and the groove width of the corresponding female threaded portion gradually decreases along the thread helix in the right-hand screw direction. Furthermore, high torque threads have flanks configured so that the threads are not radially disengaged from the grooves when make-up has been completed. Most typical high torque threads include dovetail threads, which have negative flank angles both at the load flanks 15, 25 and at the stabbing flanks 14, 24. In high torque threads, which do not include a shoulder portion, make-up is completed by engagement of the threads themselves into the grooves (this is referred to as locking).

Threaded joints employing high torque threads come in a variety of configurations. In one configuration, clearances are provided between the flat crests 12 of the male threaded portion 11 and the flat roots 23 of the female threaded portion 21 in a made-up state. In another configuration, clearances are provided between the flat roots 13 of the male threaded portion 11 and the flat crests 22 of the female threaded portion 21. In still another configuration, clearances are provided at both locations mentioned above. The solid coating is formed on either the male threaded portion 11 or the female threaded portion 21, or on both of them. FIG. 10 shows as an example the configuration in which clearances are provided between the flat crests 12 of the male threaded portion 11 and the flat roots 23 of the female threaded portion 21 in a made-up state.

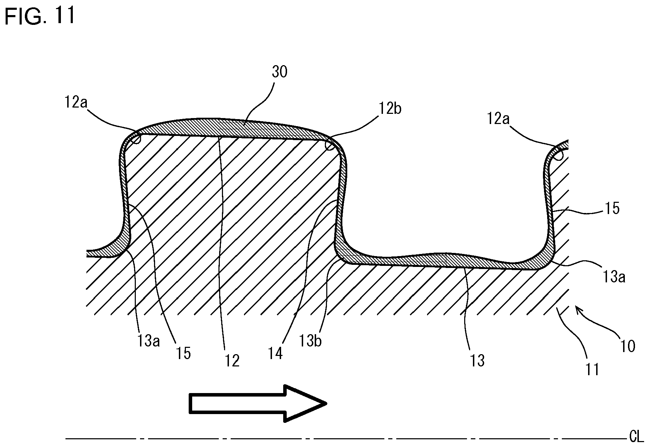

FIG. 11 is a longitudinal sectional view showing a case in which a coating has been formed on a male threaded portion of a pin, in a conventional threaded joint employing high torque threads. In the conventional threaded joint employing high torque threads, a non-uniform thickness distribution of the solid coating 30 also occurs as shown in FIG. 11.

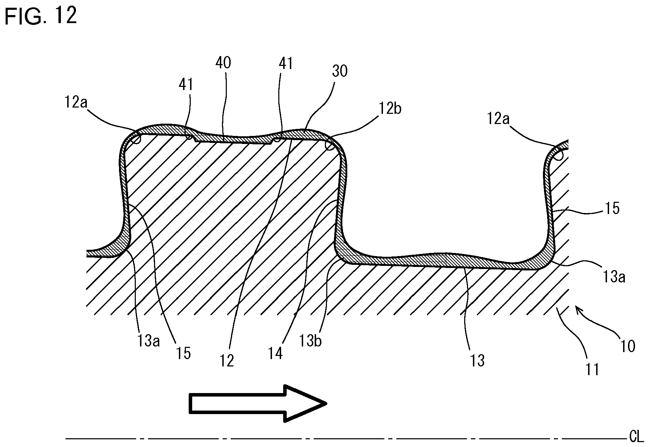

FIG. 12 is a longitudinal sectional view showing a case in which a coating has been formed on the male threaded portion of the pin, in the threaded joint employing high torque threads according to the eighth embodiment of the present invention. As shown in FIG. 12, in the threaded joint of the eighth embodiment, a shallow, trapezoidal groove 40 is previously formed as in the first embodiment described above, in a central region of the crest 12 of the male threaded portion 11, the crest 12 being provided with a clearance in a made-up state. In the eighth embodiment as well, the solid coating 30 is formed with the groove 40 included in the crest 12. Prior to the solidification and formation of the solid coating 30, the coating in a semi-solid condition applied to the crest 12 spreads in directions such that the coating thickness becomes thinner and does become thinner because of the effect of surface tension as with the first embodiment described above.

The threaded joint of the eighth embodiment also produces advantageous effects similar to those of the first embodiment described above. The cross-sectional shape of the grooves 40 of the eighth embodiment may be changed to a triangular or arcuate shape as with the second or third embodiment described above. The number of the grooves 40 in the eighth embodiment may be more than one as in the fourth embodiment described above. Furthermore, the location of the groove 40 in the eighth embodiment may be changed depending on where the solid coating is to be formed and where clearances are to be provided in a made-up state as in the fifth to seventh embodiments described above.

The present invention is not limited to the embodiments described above, and various modifications may be made without departing from the spirit and scope of the present invention. The cross-sectional shape of the groove 40 may be changed to other shapes than trapezoidal, triangular, and arcuate, such as for example, rectangular, elliptically arcuate, or the like as long as the rounded corner portions 41 having a smaller radius of curvature are provided at both ends of the groove 40. Any combinations of these cross-sectional shapes may also be employed.

Furthermore, the groove 40 is also applicable in threaded joints in which, in a made-up state, clearances are provided both between the crests 12 of the male threaded portion 11 and the roots 23 of the female threaded portion 21 and between the roots 13 of the male threaded portion 11 and the crests 22 of the female threaded portion 21. In this case, the groove 40 may be previously formed in all surfaces on which the coating is to be formed and which are provided with a clearance in a made-up state.

Furthermore, the application of the groove 40 is not limited by the form or type of the threaded joint. For example, the groove 40 may be employed in threaded joints of the coupling type or of the integral type as well as in threaded joints of the slim type, of the flush type, of the semi-flush type, or the like. Also, the groove 40 may be employed in threaded joints having a metal-to-metal seal portion where the location of the seal portion and the number thereof are not limited. Furthermore, the presence or absence of a shoulder portion, the location thereof, the number thereof, and the like are not limited. Furthermore, the groove 40 may also be employed in threaded joints constituted by two-step threads or three-step threads having two or three separate threaded portions along the pipe axis CL.

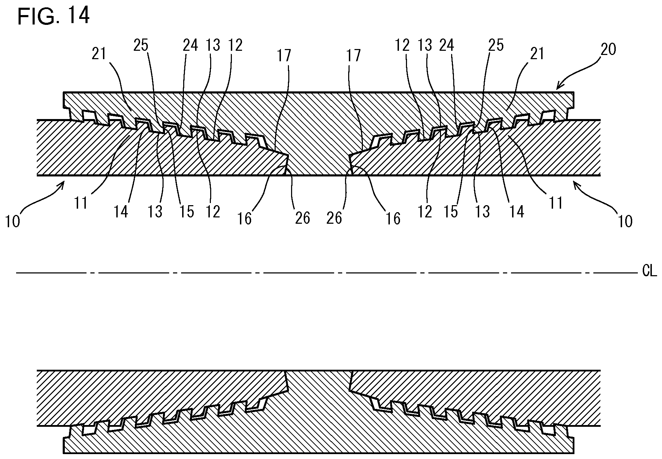

FIGS. 13 and 14 are longitudinal sectional views of exemplary threaded joints according to the present invention. These figures show exemplary coupling-type threaded joints. In the threaded joint shown in FIG. 13, paired pins 10 each include a shoulder portion 16 at an end thereof. In this case, the shoulder portions 16 of the pins 10 are abutted against each other during the course of screwing the pin 10. This causes the thread tightening axial force to be imparted to the load flanks 15, 25 of the threaded portions 11, 21.

In the threaded joint shown in FIG. 14, the pin 10 includes a shoulder portion 16, and the coupling which is the box 20 includes a shoulder portion 26 that corresponds to the shoulder portion 16 of the pin 10. In this case, the shoulder portions 16 of the pin 10 is abutted against the shoulder portion 26 of the box 20 during the course of screwing the pin 10. This causes the thread tightening axial force to be imparted to the load flanks 15, 25 of the threaded portions 11, 21. The threaded joint shown in FIG. 14 includes a metal-to-metal seal portion 17 adjacent to the shoulder portions 16, 26.

It is noted that the groove 40 is not employed in a threaded portion that does not include flat crests and roots such as one constituted by API round threads even if the threaded portion is of the type provided with clearances in a made-up state. In addition, the groove 40 need not be provided in surfaces where a clearance is not provided in a made-up state even if they are flat surfaces. For example, the solid coating, when it is present on surfaces that slidingly move during make-up, does not cause high shouldering, irregularities in torque charts, or the like even if the coating thickness is somewhat large as described above. Even if delamination of the coating occurs, the solid coating is continuously supplied by the sliding movement, and therefore the probability of galling is small in the first place. Moreover, if stabbing flanks have the groove 40, line contact occurs at the corner portions on both ends of the groove 40, and this can result in the occurrence of galling. This is because stabbing flanks slide against each other during most of the make-up process. If load flanks have the groove 40, the tensile strength of the threaded joint may be decreased. This is because the load flanks are brought into contact with each other by the axial tightening force after make-up and bear tensile loads. However, provided that these problems do not occur, the groove 40 may be provided in a surface that is in contact with the opposing surface in a made-up state.

### EXAMPLES

To verify the advantages of the present invention, numerical simulation and analysis was carried out using a finite element method, and investigation was made into the thickness distribution of a pre-solidified coating applied to a male threaded portion.

### Test Conditions

For FEM analysis, models of male threaded portions with modified buttress threads, which are generally used in premium threaded joints, were used. The model of Test No. 1 was prepared as a comparative example based on the conventional male threaded portion shown in FIG. 2, and did not have a groove in the crest. The models of Test Nos. 2 to 6 were prepared based on the male threaded portion according to the first embodiment shown in FIG. 3, and they each had one groove in the crest. The models of Test Nos. 7 to 11 were prepared based on the male threaded portion according to the fourth embodiment shown in FIG. 6, and they each had two grooves in the crest. Among the tests of No. 2 to No. 11, the depth of the groove was varied. In the meantime, the width of the groove was approximately 0.9 mm in total in all of the tests, No. 2 to No. 11. Herein, the width of the groove was a width including the rounded corner portions on both ends of the groove. The common conditions were as follows.

- Thread height: 1.575 mm;
- Thread pitch: 5TPI (five threads per inch);
- Thread width: 2.54 mm along the pitch line;
- Thread taper: 6.25% (taper angle: about 1.8°);
- Load flank angle: -3°;
- Stabbing flank angle: 10°;
- Radii of curvature of rounded corner portions of thread: 0.4 mm at load flank side and 0.76 mm at stabbing flank side;
- Radii of curvature of rounded fillet portions of root: 0.4 mm at load flank side and 0.2 mm at stabbing flank side; and
- Full length of flat surface of crest: approximately 1.4 mm.

In the FEM analysis, models in which a male threaded portion and a pre-solidified coating were modeled with plane strain elements were used. The male threaded portion was modeled as an elastic body with a Young's modulus of 205 GPa. The pre-solidified coating was modeled as a viscoplastic fluid having fluidity. The viscosity coefficient of the pre-solidified coating was 200 centistokes, the mass density thereof was 1.0 × 10⁻⁶ kg/mm³, and the surface tension thereof was 7.3 × 10⁻⁵ N/mm. In all the tests, No. 1 to No. 11, the same amount of viscoplastic fluid was applied using a spray device, and an initial coating thickness distribution was given assuming a condition immediately after the application. The initial coating thicknesses at the crest and the root were 1 and the initial coating thicknesses at the two thread corner portions were 0.7. Quasi-static analysis was conducted and finished when surface tension and viscosity (fluidity) had been balanced to reach equilibrium.

### Evaluation Method

The thicknesses of the coating on the crests at regions that have not been grooved (hereinafter referred to as "non-grooved region") were calculated. Then, the thicknesses of the coating at the two corner portions of the threads (on the load flank side and on the stabbing flank side) were calculated. Evaluations of the coating thickness distributions were made by using values obtained by dividing the coating thicknesses at the thread two corner portions by the corresponding maximum coating thickness at the non-grooved region of the crest. These values represent relative values with respect to the corresponding maximum coating thickness at the non-grooved region of the crest when it is assumed to be 1. It can be appreciated that the larger the value (closer to 1), the more the non-uniformity of the coating thickness distribution is reduced, meaning that the model has better durability, galling resistance, and torque stability. Furthermore, as a criterion for determining galling resistance, minimum coating thicknesses at the non-grooved regions and at the thread two corner portions were also evaluated. In all cases, the coating thickness was smallest at the thread corner portion on the load flank side. The results are summarized in Table 1 below.

[Table 1]

**TABLE 1**

| No. | Groove Depth [µm] | Coating Thickness (Relative Values) | | Minimum Coating Thickness [µm] | Classification |
|---|---|---|---|---|---|
| | | thread corner portion on stabbing flank side | thread corner portion on load flank side | thread corner portion on load flank side | |
| 1 | no groove | 0.186 | 0.086 | 19 | Comp. Ex. (FIG. 2) |
| 2 | 20 | 0.278 | 0.139 | 25 | Comp. Ex. (FIG. 3) |
| 3 | 30 | 0.353 | 0.176 | 30 | Inv. Ex. (FIG. 3) |
| 4 | 100 | 0.455 | 0.273 | 30 | Inv. Ex. (FIG. 3) |
| 5 | 315 | 0.500 | 0.313 | 25 | Inv. Ex. (FIG. 3) |
| 6 | 350 | 0.429 | 0.271 | 19 | Comp. Ex. (FIG. 3) |
| 7 | 20 | 0.225 | 0.115 | 23 | Comp. Ex. (FIG. 6) |
| 8 | 30 | 0.253 | 0.158 | 30 | Inv. Ex. (FIG. 6) |
| 9 | 100 | 0.458 | 0.250 | 30 | Inv. Ex. (FIG. 6) |
| 10 | 315 | 0.511 | 0.278 | 25 | Inv. Ex. (FIG. 6) |
| 11 | 350 | 0.560 | 0.240 | 18 | Comp. Ex. (FIG. 6) |

### Test Results

The results shown in Table 1 indicate that, in the inventive examples of Test Nos. 3 to 5 and Test Nos. 8 to 10, in which the groove was provided and the depth of the groove satisfied the conditions specified in the present invention, the relative values of the coating thicknesses at the thread corner portions were at least 0.15 and the minimum coating thicknesses were 20 µm or greater. This demonstrates that the present embodiment makes it possible to inhibit the non-uniformity of the coating thickness distribution and reduce the risk of the occurrence of galling.

### INDUSTRIAL APPLICABILITY

The threaded joint of the present invention can be effectively utilized to connect steel pipes which are used in oil wells, gas well, and the like for extracting underground resources such as petroleum and natural gas, producing them, or using them, and also in wells for hot springs or geothermal power generation, and further in wells for underground containment of waste such as CO₂, and the like. In addition, it can be utilized in connecting steel pipes that are used to transport methane hydrate, rare metals, and the like from the sea bed to an offshore platform. The threaded joint of the present invention is particularly useful in connecting steel pipes that are used in areas where more stringent environmental regulations are adopted for solid lubricant coatings, solid corrosion protective coatings, and the like, and in areas where higher efficiency of the make-up operation as well as reduction of burdens on workers is required, such as polar regions, oceans, or deserts.

### REFERENCE SIGNS LIST

- 10:: pin,
- 11:: male threaded portion,
- 12:: crest of male threaded portion,
- 13:: root of male threaded portion,
- 14:: stabbing flank of male threaded portion,
- 15:: load flank of male threaded portion,
- 20:: box,
- 21:: female threaded portion,
- 22:: crest of female threaded portion,
- 23:: root of female threaded portion,
- 24:: stabbing flank of female threaded portion,
- 25:: load flank of female threaded portion,
- 30:: solid coating,
- 40:: groove,
- 41:: rounded corner portion of groove,
- 16, 26:: shoulder portion,
- 17:: metal-to-metal seal portion,
- θ:: flank angle, CL: pipe axis.

## Claims

1. A threaded joint for steel pipes, comprising: a tubular pin having a tapered male threaded portion; and a tubular box having a tapered female threaded portion, the pin and the box being made up by screwing the male threaded portion into the female threaded portion,
the threaded joint for steel pipes including a solid coating formed on at least one of a surface of the male threaded portion and a surface of the female threaded portion, the solid coating having fluidity during application and being cured after the application,
the threaded joint, in a made-up state, having one of the following configurations:
clearances are provided between crests of the male threaded portion and roots of the female threaded portion which face the crests of the male threaded portion, the crests and the roots being flat surfaces; clearances are provided between roots of the male threaded portion and crests of the female threaded portion which face the roots of the male threaded portion, the roots and the crests being flat surfaces; or clearances are provided between crests of the male threaded portion and roots of the female threaded portion which face the crests of the male threaded portion, the crests and the roots being flat surfaces, and also, clearances are provided between roots of the male threaded portion and crests of the female threaded portion which face the roots of the male threaded portion, the roots and the crests being flat surfaces,
wherein:
among the flat surfaces provided with the clearance, the flat surfaces on which the solid coating is to be formed have at least one helical groove previously formed therein, the helical groove having a lead angle equal to a lead angle of threads, and
the groove has a maximum depth of at least 30 µm, the depth being at most one-fifth of a height of the threads.

2. The threaded joint for steel pipes according to claim 1, wherein:
the male threaded portion and the female threaded portion each include crests, roots, stabbing flanks, and load flanks.

3. The threaded joint for steel pipes according to claim 1 or 2, wherein:
the solid coating is formed on the male threaded portion; the clearances are provided between the flat crests of the male threaded portion and the flat roots of the female threaded portion; and the groove is formed in the crests of the male threaded portion.

4. The threaded joint for steel pipes according to claim 1 or 2, wherein:
the solid coating is formed on the male threaded portion; the clearances are provided between the flat roots of the male threaded portion and the flat crests of the female threaded portion; and the groove is formed in the roots of the male threaded portion.

5. The threaded joint for steel pipes according to claim 1 or 2, wherein:
the solid coating is formed on the male threaded portion; the clearances are provided between the flat crests of the male threaded portion and the flat roots of the female threaded portion and also between the flat roots of the male threaded portion and the flat crests of the female threaded portion; and the groove is formed in the crests of the male threaded portion and in the roots thereof.

6. The threaded joint for steel pipes according to claim 1 or 2, wherein:
the solid coating is formed on the female threaded portion; the clearances are provided between the flat crests of the male threaded portion and the flat roots of the female threaded portion; and the groove is formed in the roots of the female threaded portion.

7. The threaded joint for steel pipes according to claim 1 or 2, wherein:
the solid coating is formed on the female threaded portion; the clearances are provided between the flat roots of the male threaded portion and the flat crests of the female threaded portion; and the groove is formed in the crests of the female threaded portion.

8. The threaded joint for steel pipes according to claim 1 or 2, wherein:
the solid coating is formed on the female threaded portion; the clearances are provided between the flat crests of the male threaded portion and the flat roots of the female threaded portion and also between the flat roots of the male threaded portion and the flat crests of the female threaded portion; and the groove is formed in the roots of the female threaded portion and in the crests thereof.

9. The threaded joint for steel pipes according to any one of claims 3 to 8, wherein:
in a made-up state, the stabbing flanks of the male threaded portion and the stabbing flanks of the female threaded portion which face the stabbing flanks of the male threaded portion are not in contact with each other.

10. The threaded joint for steel pipes according to any one of claims 1 to 9, wherein:
the groove has a cross-sectional shape that is trapezoidal, rectangular, triangular, arcuate, or elliptically arcuate.

11. The threaded joint for steel pipes according to any one of claims 1 to 10, wherein:
the groove has rounded corner portions on both ends thereof in cross section, the rounded corner portions having a radius of curvature that is smaller than a radius of curvature of rounded corner portions between the crests and the load flanks.

12. The threaded joint for steel pipes according to any one of claims 1 to 11, wherein:
in each flat surface having the groove, the groove has a width in total of at least one-third of a full width of the flat surface.

13. The threaded joint for steel pipes according to any one of claims 1 to 12, wherein:
the pin and the box each include a shoulder portion, the shoulder portions being brought into contact with each other in the process of screwing.

14. The threaded joint for steel pipes according to any one of claims 1 to 13, wherein:
the pin and the box each include a seal portion, the seal portions being in contact with each other in a made-up state.

15. The threaded joint for steel pipes according to any one of claims 1 to 14, wherein:
the male threaded portion of the pin and the female threaded portion of the box are each constituted by two-step threads or three-step threads having two or three separate threaded portions along the pipe axis.
